# DEMANDE DE BREVET EUROPEEN

(11) **EP 2 642 149 A1**
(43) Date de publication de la demande: **25.09.2013**
(21) Numéro de dépôt: 12305333.2
(22) Date de dépôt: 21.03.2012
(51) Int. Cl.: F16D 65/10, F16D 65/12, F16D 66/00

(54) **Système de mesure de la température de pièces de freinage de véhicules automobiles**

(71) Demandeur: Fiday Gestion, 70360 Chassey-les-Scey (FR)
(72) Inventeur: Garnier, Jean-Pierre, 70190 PENNESIERES (FR)
(74) Mandataire: Thinat, Michel

(57) **Abrégé**

L'invention concerne un système de mesure de la température de pièces de freinage (2), tels que des saques de frein ou de tambour de frein, de véhicule tels que des véhiculez automobiles, notamment de camion et de remorque.

Le système est caractérisé en ce qu'il comprend un capteur de température (1) comportant une sonde de température et une partie électronique de traitement des informations reçues de la sonde, et en ce qu'au moins la partie électronique est disposée à une distance prédéterminée de la zone de production (9) de la température par le freinage, à un endroit où la température est inférieure à la température de la zone de freinage, de façon prédéterminée.

L'invention est utilisable pour des camions.

## Description

L'invention concerne un système de mesure de la température de pièces de freinage, tels que des disques de frein ou de tambours de frein, de véhicules, tels que des véhicules automobiles, notamment de camions et de remorques.

Etant donné que ces camions circulent à des vitesses importantes, la sécurité sur route ou autoroute devient primordiale pour éviter des accidents. Parmi ces accidents figurent ceux occasionnés par un échauffement trop important des pièces de freinage, qui peut conduire à des incendies si ces camions transportent des marchandises inflammables, ou à des déversements des marchandises qui pourraient être dangereuses pour l'environnement et/ou l'homme.

Les systèmes de freinage utilisés sur les camions et remorques de poids-lourds sont soit des disques de frein, soit des tambours de frein en fonte, sur lesquels une friction est exercée, grâce à des plaquettes ou garnitures. Du fait de la masse embarquée par le camion et de sa vitesse, une quantité importante d'énergie est dissipée lors du freinage, surtout en cas de freinage d'urgence ou de freinage prolongé. Les garnitures de frein ainsi que la piste de freinage là où a lieu la friction des disques et tambours peuvent alors être portés à des températures élevées de 500 à 600°C en quelques secondes. Ces élévations de température qui peuvent être répétées ainsi que la non homogénéité de distribution de ces mêmes températures dans la pièce de freinage, dû à l'inertie et conduction thermique de la fonte des tambours et disques, créent des contraintes mécaniques qui vont user prématurément les garnitures et les pièces de freinage. Ceci a pour conséquence une diminution de la durée de vie de ces pièces, donc des coûts de maintenance supplémentaires pour le transporteur. Des élévations de température répétées peuvent provoquer une rupture du tambour et du disque, ce qui peut conduire à des accidents.

L'invention a pour but de pallier cet inconvénient.

Pour atteindre ce but, 1e système selon l'invention est **caractérisé en ce qu'**il comprend un capteur de température comportant une sonde de température et une partie électronique de traitement des informations reçues de la sonde, et en ce qu'au moins la partie électronique est disposée à une distance prédéterminée de 1a zone de production de la température par le freinage, à un endroit où la température est inférieure à la température de la zone de freinage, de façon prédéterminée.

Selon une caractéristique de l'invention, le système est **caractérisé en ce que** le capteur de température est un capteur à émission sans fil lorsqu'il est monté sur une pièce de freinage mobile.

Selon une autre caractéristique de l'invention, le système est **caractérisé en ce que** le capteur comprend un boîtier enfermant la sonde de température et la partie électronique, le boîtier comportant des moyens de fixation sur la pièce de freinage dont on veut mesurer la température.

Selon encore une autre caractéristique de l'invention, le système est **caractérisé en ce qu'**il comprend des moyens établissant la corrélation entre les températures des zones de freinage et les températures mesurées par le capteur de température, tel qu'une courbe d'étalonnage.

Selon encore une autre caractéristique de l'invention, le système est **caractérisé en ce que** le boîtier est pourvu de moyens de refroidissement pour assurer la tenue à la température des composants électroniques.

Selon encore une autre caractéristique de l'invention, le système est **caractérisé en ce que** le capteur comporte des moyens d'isolation thermique de la pièce de support.

Selon encore une autre caractéristique de l'invention, le système est **caractérisé en ce que** le capteur est monté dans une encoche pratiquée dans sa pièce de support.

Selon encore une autre caractéristique de l'invention, le système est **caractérisé en ce que** le capteur de température est un capteur pouvant supporter dans sa zone de fixation une température maximale de 150 à 200°C pour des pièces de freinage ayant une température maximale de l'ordre de 600°C, dans la zone de friction des garnitures de frein (zone la plus sollicitée en température).

Selon encore une autre caractéristique de l'invention, le système est **caractérisé en ce que** la sonde de températures est disposée au moins près de la zone de freinage.

Selon encore une autre caractéristique de l'invention, le système est **caractérisé en ce que** le capteur est relié à un ordinateur tel que l'ordinateur de bord du véhicule, qui est adapté pour enregistrer les données relatives aux températures de freinage et exploiter ces enregistrements pour donner des informations sur l'usure et l'état des freins.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue en perspective d'un disque de frein, pourvu d'un capteur de température, conformément à l'invention ;
- la figure 2 est une vue en perspective d'un tambour de frein, pourvu d'un capteur de température, conformément à l'invention ;
- les figures 3 et 4 sont deux vues en perspective chacune d'une version de réalisation d'un capteur de température selon l'invention, monté sur un tambour de frein ;
- la figure 5 est un schéma illustrant la courbe d'étalonnage, montrant la température de la zone de freinage d'un tambour de frein d'un camion en fonction de la température mesurée par le capteur de température, selon l'invention ;
- la figure 6 est une vue en coupe axiale d'un tambour de frein, dans lequel la sonde de températures et le boîtier sont deux pièces séparées ; et
- la figure 7 est un agrandissement du détail encerclé sur la figure 6.

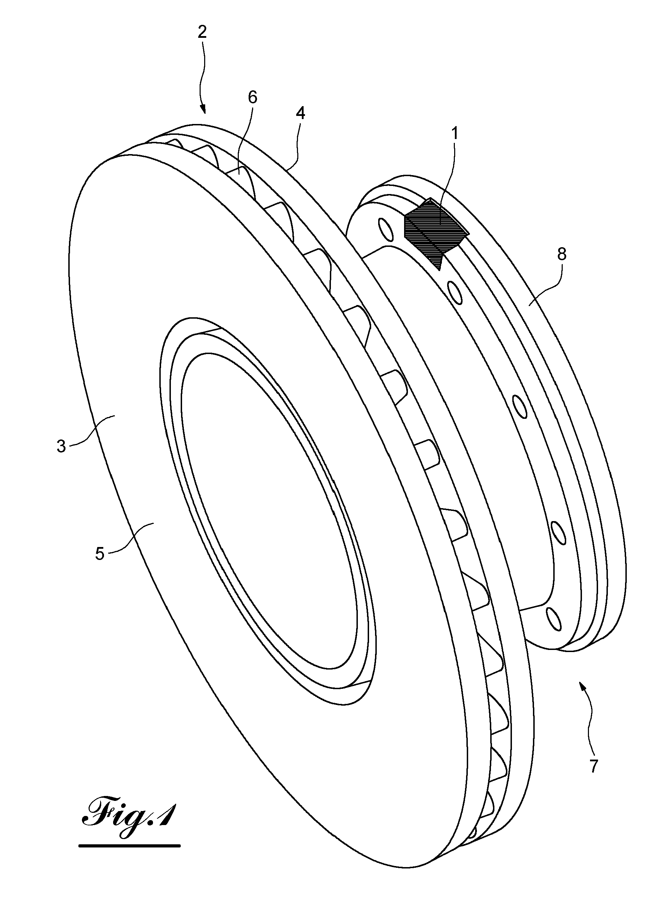

La figure 1 illustre, à titre d'exemple, l'implantation d'un capteur de température 1 sur une pièce de freinage 2, ici un disque de frein. Ce disque comprend, de façon connue en soi, deux éléments de disque annulaires extérieurs 3, 4 dont les faces extérieures notées 5 constituent les pistes de freinage du disque, une partie centrale de refroidissement 6 disposée entre les parties axialement extérieures 3, 4 et le moyeu de fixation de roues 7 qui fait axialement saillie de l'ensemble formé par les éléments de disques et la partie centrale de refroidissement et qui se termine par une bride 8 de montage sur la roue.

Dans l'exemple représenté, le capteur de température 1 n'est pas directement en contact avec les zones de freinage, à savoir les pistes de freinage 6, qui peuvent être échauffées lors d'un freinage à des températures de 500 à 600°C, mais est disposé à une certaine distance des zones de freinage, dans l'exemple représenté sur la bride de montage 8. L'emplacement du capteur est choisi en fonction de la température maximale admise du capteur, qui est inférieure à la température des zones de freinage et donc à reconnaître et pourrait être de l'ordre de 150°C. Autrement dit, le capteur est placé à un endroit suffisamment éloigné des zones de freinage de façon que la température présente à cet endroit soit compatible avec la température limite du capteur même lorsque la température des zones de freinage atteint la valeur maximale.

Bien entendu, pour que la température mesurée à l'emplacement du capteur soit représentative de la température produite lors du freinage au niveau des zones et donc des pistes de freinage, il faut que la relation entre les températures des zones de freinage et à l'endroit de mesure par le capteur soit bien définie pour toute la gamme de températures devant être mesurées, à savoir la température ambiante et la température maximale des zones de freinage, d'une part, et la température maximale du capteur, d'autre part. A cette fin, la mise en oeuvre de l'invention implique la réalisation d'une courbe d'étalonnage qui établit la corrélation entre les températures de freinage et les températures que mesure le capteur.

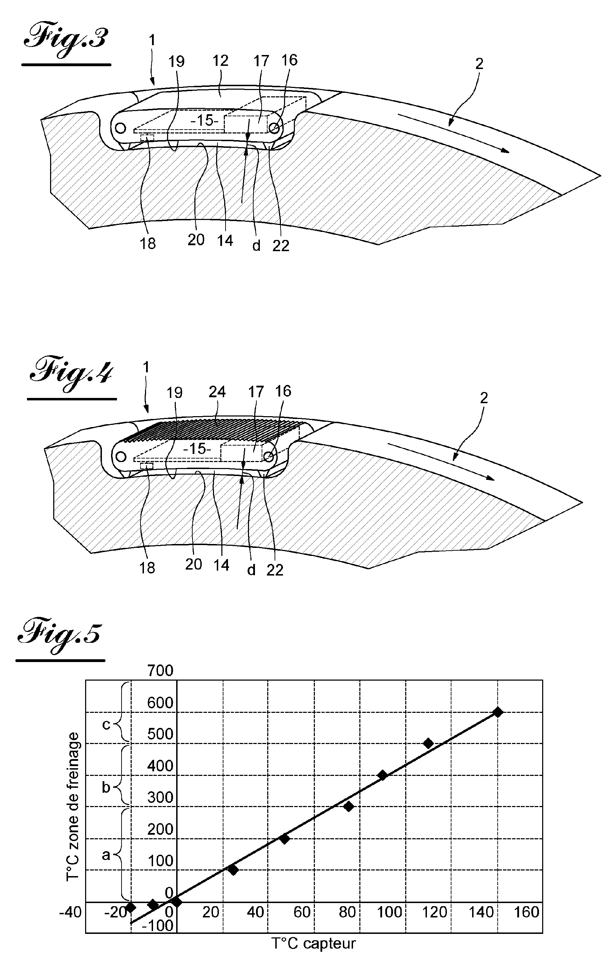

La figure 5 illustre une telle courbe d'étalonnage de la température de freinage en fonction de la température que mesure le capteur, appelée température mesurée. Les températures de freinage sont indiquées sur l'ordonnée du schéma et les températures mesurées du capteur sur l'abscisse de celui-ci. On constate que les points noirs mesurés se trouvent approximativement sur une ligne droite qui a une pente de façon qu'à une température de 600°C de freinage le capteur mesure une température de 140°C dans l'exemple représenté.

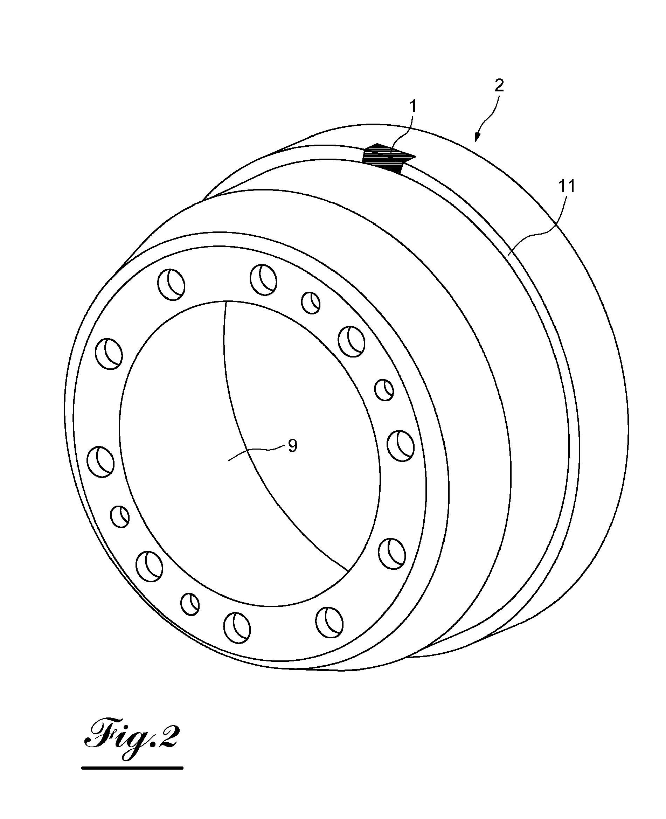

La figure 2 montre l'application de l'invention à un tambour de frein 2 dont la face interne 9 constitue la piste de freinage et donc la zone qui est susceptible de s'échauffer à des températures pouvant atteindre 600°C. Dans ce cas, le capteur 1 est disposé sur la face périphérique extérieure 10, au niveau d'une rainure périphérique 11.

Le choix de l'emplacement du capteur est fait de façon que le rapport entre les températures de freinage et mesurée par le capteur corresponde à une courbe d'étalonnage telle que représentée sur la figure 5, de manière à avoir la meilleure précision de mesure (utilisation de la pleine échelle du capteur), tout en respectant la tenue en température des composants électroniques.

Les figures 3 et 4 illustrent schématiquement la structure de capteurs de température utilisable dans le cadre de l'invention et la manière de monter ces capteurs. Dans les exemples représentés sur les figures 3 et 4, les capteurs 1 sont montés sur un tambour de frein.

Comme on le voit sur les figures, le capteur 1 comprend un boîtier 12 de forme générale parallélépipédique, mais légèrement courbe pour qu'il soit adapté à l'arrondie du tambour de frein. Le capteur est placé dans une encoche 14 qui a été pratiquée préalablement dans la face externe du tambour. La forme de l'encoche est complémentaire à la forme du boîtier. Celui-ci est fixé au tambour par tout moyen de fixation approprié dont les trous de fixation sont indiqués en 16. Le boîtier enferme un circuit imprimé indiqué schématiquement en 15, un compartiment de logement de piles électriques 17 et une sonde de température 18 située près de la surface inférieure 19 du boîtier, en regard du fond 20 de l'encoche. Dans l'exemple représenté, la surface inférieure 19 du boîtier est éloignée du fond 20 de l'encoche d'une distance calibrée d.

L'endroit d'implantation sur le tambour de frein est choisi de façon que pour une température de freinage maximale de 600°C au niveau de la face de freinage, la température du fond 20 de l'encoche 14 soit descendue par exemple à une valeur de 300°C. La distance calibrée d est déterminée afin que l'espace entre le fond 20 et la surface inférieure 19 du boîtier constitue une isolation thermique telle que pour la température de l'ordre de 300°C du fond de l'encoche la température au niveau de la sonde de température 18 que celle-ci doit donc mesurer soit de l'ordre de 150°C. Il est à noter que le boîtier prend appui sur le fond d'encoche par l'intermédiaire de saillie d'appui 22.

A titre d'exemple, la distance calibrée pourrait être de quelques dixièmes de millimètre, à savoir 0.5 à 2mm.

La figure 4 montre un capteur du type du capteur de la figure 3, mais dont le boîtier est pourvu d'un petit radiateur 24 sur sa surface extérieure, pour protéger les piles et les composants électroniques du circuit imprimé 15 des températures trop élevées, par dissipation plus rapide de la chaleur. Bien entendu on pourrait aussi envisager supplémentairement une isolation thermique spécifique au niveau de la fixation du capteur au tambour de frein, sans pour autant créer trop d'inertie de réponse pour le capteur de température.

Ci-dessus on a donné à titre d'exemple pour la température limite du capteur la valeur de 150°C parce qu'il existe sur le marché des capteurs qui sont fabriqués en série et sont conçus pour pouvoir mesurer des températures variant entre la température ambiante et 150-200°C maximum. Ainsi en déportant l'emplacement du capteur de la zone de freinage dont la température doit être détectée, l'invention permet d'utiliser des capteurs de série et donc peu coûteux. Il s'agit de capteurs de mesure pression ou de températures déjà utilisés en grande série et homologués pour les camions et voitures pour la mesure des pressions et températures dans les pneumatiques en mouvement.

Conformément à l'invention, ces capteurs connus dans le domaine des camions pour la mesure de la pression dans les pneumatiques, sont utilisés pour mesurer l'échauffement des zones de freinage. Pour que ces capteurs de série soient parfaitement adaptés à l'utilisation dont fait l'invention, on a apporté quelques modifications aux capteurs tels que fabriqués. A cette fin on a rapproché la sonde de mesure de la température du bord du boîtier de protection pour diminuer l'inertie de la réponse en température et on a prévu un nouveau moulage du boîtier de protection en lui donnant un léger arrondi pour suivre la forme de la pièce de freinage et en lui ajoutant des trous pour sa fixation. De plus on a prévu sur le boîtier les moyens d'appui permettant le positionnement du boîtier à une distance calibrée de la pièce. Une autre modification consiste à équiper les boîtiers de moyens de refroidissement supplémentaires à ailettes pour éviter le risque de destruction thermique.

De façon générale, l'invention permet l'utilisation de capteurs de températures disponibles dans le commerce, mais dont le positionnement des composants électroniques dans le boîtier, ainsi que la forme du boîtier et sa fixation ont été adaptés aux pièces de freinage, la nature des composants électroniques pouvant rester la même. Bien entendu, l'invention pourrait être utilisée avec tout autre capteur de température approprié comportant une partie de sonde de température et une partie électronique d'exploitation des informations fournies par la sonde, l'emplacement du capteur étant fonction de la température limite du capteur qui pourrait être inférieure ou supérieure aux valeurs comprises entre 120 et 150°C qui n'ont été données qu'à titre d'exemple non limitatif.

Etant donné que les capteurs de température sont montés sur des pièces en mouvement, les capteurs sont équipés d'un émetteur et d'une antenne miniature émettant sans fil sur une fréquence prédéterminée, par exemple normalisée de 434MHz, avec un protocole d'émission des informations programmables. Ces informations sont directement captées au niveau de l'ordinateur de bord du camion, traitées et affichées en assurant une bonne visualisation au chauffeur. Au niveau du tableau de bord, on pourrait prévoir une visualisation spécifique pour permettre au conducteur du véhicule d'apprécier facilement l'état des freins. Ainsi on pourrait prévoir, à titre d'exemple, une zone verte a pour une température de la zone de freinage inférieure à 300°C, une zone orange b entre 300°C et 500°C et une zone rouge c critique au-delà de 500°C.

Ainsi l'invention permet de prévenir le chauffeur et d'aider à la conduite du véhicule, ce qui va se traduire par une meilleure utilisation des freins et donc par une moindre usure. De plus, l'invention permet d'identifier des anomalies entre les deux systèmes de freinage situés sur un même essieu grâce à l'analyse de leur différence de température indiquée (frein bloqué, pièce de freinage endommagée etc). L'enregistrement des données au niveau de l'ordinateur de bord peut permettre un traitement des données en cumulant les situations défavorables, à savoir le temps et les cycles au cours desquels la température est très élevée. Cette information peut, après apprentissage, permettre de préciser si la pièce de freinage est susceptible d'être usée, et si elle doit être remplacée ou non. Une optimisation de la durée de vie de pièces de freinage peut ainsi être trouvés, ce qui peut permettre de réduire les coûts d'exploitation. Cette sécurité supplémentaire permet aux sociétés de transport de bénéficier de primes d'assurance à coût plus réduit. Plus en détail, l'ordinateur de bord pourrait enregistrer les quantités cumulées des grandeurs « températures » multipliées par « le temps » au-delà d'une valeur donnée, par exemple de 300°C. Ces quantités cumulées sont proportionnelles à l'énergie dissipée par le système de freinage. Ainsi la durée de vie des garnitures et des pièces de freinage, tambour ou disque, qui est directement lié à cette énergie cumulée dissipée, pourrait, après apprentissage, être estimée et intégrée sur l'ordinateur de bord du véhicule. Ainsi, comme cela a été déjà dit plus haut, le transporteur pourrait alors faire vérifier les pièces concernées quand l'ordinateur de bord lui en donnera l'information.

Bien entendu l'invention n'est pas limitée à l'utilisation de capteurs de température fabriqués en série et/ou ayant une température maximale de 150°. D'autres capteurs ayant d'autres températures limites inférieures aux températures de freinage pourraient être utilisés. Il faut seulement prévoir une courbe d'étalonnage appropriée pour assurer une corrélation bien définie entre l'étendue des températures des zones de freinage entre la température ambiante et par exemple 600°C, d'une part, et les températures que mesure le capteur allant de la température ambiante à la température maximale pour lequel ce capteur est conçu, d'autre part. Bien entendu on recherchera toujours, pour l'implantation du capteur, un endroit le plus près possible des zones de freinage pour limiter l'inertie du transfert thermique, et pour assurer la meilleure utilisation de l'échelle de mesure, garantie d'une précision optimale, tout en assurant le respect de la gamme de température pour lequel le capteur est réalisé.

De manière à limiter les coûts, le lieu d'implantation du capteur sera préparé avant la fabrication de la pièce de freinage, soit par usinage, soit directement par fonderie. La fixation du capteur sera réalisée de manière à assurer une bonne tenue mécanique quant aux vibrations, l'échauffement, l'humidité, pour qu'il ne se détache pas, surtout s'il est positionné sur une pièce tournante comme un tambour ou un disque de frein. Il sera fixé de manière à le protéger au mieux de l'environnement, pluie, humidité, boue, choc avec des graviers lors du roulage. Le capteur sera positionné de manière à pouvoir être démonté aisément, par exemple lorsque les piles sont déchargées ou en cas de disfonctionnement.

Dans le cas où une précision plus importante de température est demandée, l'invention prévoit de fixer le capteur de température sans les composants électroniques directement dans la zone chaude de la pièce, soit directement lors de l'opération de fonderie, soit après usinage, et de relier ensuite le capteur aux composants électroniques, la partie électronique restant bien entendu dans une zone compatible avec la tenue thermique, par exemple de 150 à 200°C.

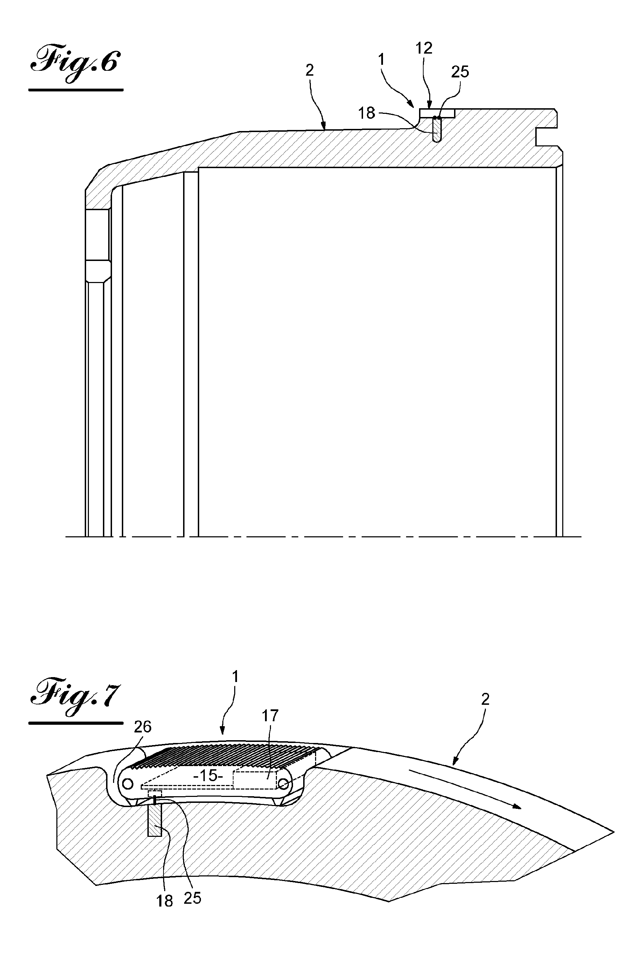

Les figures 6 et 7 montrent une autre version de mise en oeuvre de l'invention. Dans ce cas, la sonde de températures 18 est séparée du boîtier de capteur 12 et intégrée dans la pièce de freinage 2, ici un tambour de frein, lors de la coulée de la fonte, les broches de contact électrique 25 étant placées dans du sable destiné à former une réservation 26 pour la réception du boîtier qui enferme la partie électronique 15 et le logement de piles 17 et pourrait être conçu conformément à la figure 4, le cas échéant pourvu des moyens de refroidissement sur sa face extérieure. Après le refroidissement du tambour et l'élimination du sable, le boîtier est placé dans la réservation et fixé sur les broches 25.

Dans le cas où la température pourrait être supérieure à 150°C dans les zones préconisées, un dispositif spécial de fixation, avec isolant thermique calibré, ou un système de refroidissement approprié, peut être installé entre la pièce et le capteur, le but recherché étant de protéger la pile et les circuits électroniques.

## Revendications

1. Système de mesure de la température de pièces de freinage, tels que des disques de frein ou de tambour de frein, de véhicules tels que des véhicules automobiles, notamment de camion et de remorque, **caractérisé en ce qu'**il comprend un capteur de température (1) comportant une sonde de température (18) et une partie électronique (15,17) de traitement des informations reçues de la sonde, et **en ce qu'**au moins la partie électronique est disposée à une distance prédéterminée de la zone de production de la température par le freinage, à un endroit oû la température est inférieure à la température de la zone de freinage, de façon prédéterminée.

2. Système selon la revendication 1, **caractérisé en ce que** le capteur de température (1) est un capteur à émission sans fil lorsqu'il est monté sur une pièce de freinage mobile.

3. Système selon la revendication 1 ou 2, **caractérisé en ce que** le capteur comprend un boîtier (12) enfermant la sonde de température (18) et la partie électronique, le boîtier comportant des moyens de fixation (16) sur sa pièce de support.

4. Système selon l'une des revendications 1 à 3, **caractérisé en ce qu'**il comprend des moyens établissant la corrélation entre les températures des zones de freinage et les températures mesurées par le capteur de température, tel qu'une courbe d'étalonnage.

5. Système selon l'une des revendications 1 à 4, **caractérisé en ce que** le boîtier est pourvu de moyens de refroidissement.

6. Système selon l'une des revendications 1 à 5, **caractérisé en ce que** le capteur comporte des moyens d'isolation thermique de la pièce de support.

7. Système selon l'une des revendications 1 à 6, **caractérisé en ce que** le capteur est monté dans une encoche pratiquée dans sa pièce de support.

8. Système selon l'une des revendications 1 à 7, **caractérisé en ce que** le capteur de température (1) est un capteur pouvant avoir une température maximale de 150 à 200°C pour des pièces de freinage ayant une température maximale de l'ordre de 600°C.

9. Système selon l'une des revendications 1 ou 4 à 8, **caractérisé en ce que** la sonde de températures est disposée au moins près de la zone de freinage.

10. Système selon l'une des revendications 1 à 9, **caractérisé en ce que** le capteur est relié à un ordinateur tel que l'ordinateur de bord du véhicule, qui est adapté pour enregistrer les données relatives aux températures de freinage et exploiter ces enregistrements pour donner des informations sur l'usure et l'état des freins.
